Europäisches Patentamt

European Patent Office

Office européen des brevets

(11) Numéro de publication: **0 346 205 A1**

(12) **DEMANDE DE BREVET EUROPEEN**

(21) Numéro de dépôt: **89401544.5**

(22) Date de dépôt: **05.06.89**

(51) Int. Cl.4: **B 65 G 51/03**

(30) Priorité: **08.06.88 FR 8807636**

(43) Date de publication de la demande:
**13.12.89 Bulletin 89/50**

(84) Etats contractants désignés: **BE DE GB IT NL**

(71) Demandeur: **COMMISSARIAT A L'ENERGIE ATOMIQUE**
**31/33, rue de la Fédération**
**F-75015 Paris (FR)**

(72) Inventeur: **Lazzari, Jean-Pierre**
**45 Chemin de Malanot**
**F-38700 Corenc (FR)**

(74) Mandataire: **Mongrédien, André et al**
**c/o BREVATOME 25, rue de Ponthieu**
**F-75008 Paris (FR)**

(54) Dispositif de transport sur coussin d'air avec guidage magnétique.

(57) Dispositif de transport sur coussin d'air avec guidage magnétique comprenant une piste (12) munie de conduits de jets d'air débouchant obliquement dans un sens longitudinal sur sa face supérieure, permettant le déplacement longitudinal d'un plateau (30) sans contact avec la piste (12). La piste supporte un premier dispositif magnétique (34) de guidage courant sur sa face supérieure. Le plateau (30) est muni sur sa face en vis-à-vis de la piste (12) d'un second dispositif magnétique en regard du premier dispositif magnétique (34) de guidage.

Application au transport de plaquettes de silicium en environnement ultrapropre.

FIG. 2

## Description

### DISPOSITIF DE TRANSPORT SUR COUSSIN D'AIR AVEC GUIDAGE MAGNETIQUE.

La présente invention a pour objet un dispositif de transport sur coussin d'air avec guidage magnétique. Elle s'applique notamment au transport de tranches de silicium en environnement ultra propre.

Les tranches de silicium sont chargées dans des cassettes. Le déplacement de ces tranches lors de leur transfert de cassette à cassette ou entre une cassette et une machine de traitement (gravure, dépôt, ...) doit être effectué en évitant au mieux l'apparition de poussières polluantes.

Différents dispositifs connus sont employés pour ce transport : un premier système consiste en deux courroies cylindriques parallèles guidées chacune par deux galets. L'entraînement des galets en rotation permet de transporter une tranche posée sur les courroies. Ce premier système présente un inconvénient majeur : les courroies émettent des particules engendrées par leur frottement sur les galets. Les particules peuvent se coller sur les tranches de silicium et les polluer.

Un deuxième système connu consiste en un bras articulé muni d'un doigt "suceur". La tranche à transporter est maintenue par aspiration sur le doigt "suceur". Ce dispositif, peu polluant, ne permet que de courts trajets ; par ailleurs, il est coûteux.

A ces deux premiers systèmes, on préfère généralement un système, connu de l'homme de métier, de lévitation sur coussin d'air.

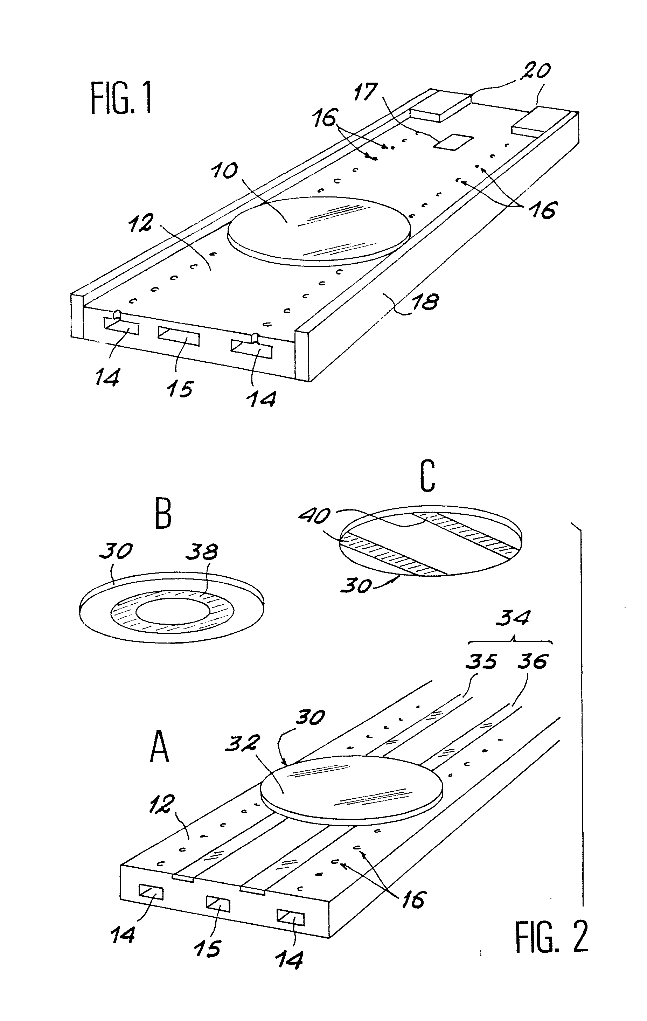

La figure 1 représente schématiquement un tel système. Une tranche 10 de silicium est portée et mise en déplacement par un coussin d'air au-dessus d'une piste 12. Cette piste 12 comporte deux conduits 14 parallèles et longitudinaux débouchant obliquement par des orifices 16 sur sa face supérieure en vis-à-vis de la tranche 10. De l'air sous pression est insufflé (par un système de soufflerie, non représenté) dans ces conduits 14 de manière à ressortir sous forme de jets obliques par les orifices 16.

Ce dernier dispositif n'est pas exempt d'inconvénients :
- la tranche 10, si elle n'est pas guidée, peut s'échapper de la piste 12. Pour éviter cela, on ajoute des guides latéraux 18 de part et d'autre de la piste 12. Cependant pour être guidée, la tranche cogne de temps à autre sur un guide latéral 18, ce qui libère irrémédiablement des particules polluantes ;
- la tranche en mouvement est dotée d'une certaine énergie cinétique. Pour l'arrêter on utilise un système de butées 20 placées en bout de piste 12 associé à un système à dépression venant, par aspiration, fixer la tranche 10 sur la piste 12. Le système à dépression consiste en un conduit 15 formé longitudinalement dans la piste 12 et débouchant sur cette dernière par un orifice 17. Ce conduit 15 est relié à un système d'aspiration (non représenté). Lors de l'arrêt par les butées 20, le choc, de la même manière que précédemment, engendre des particules polluantes ;
- les jets évacués par les orifices 16 forment un puissant courant d'air à l'arrière de la tranche 10, ce qui parfois décolle des particules. Ces particules peuvent ensuite se recoller sur la tranche. Ce phénomène détruit l'état de surface de la tranche.

L'invention a pour but de pallier ces divers inconvénients. Pour cela, elle préconise l'usage d'un plateau supportant la tranche. Sur la piste et sur le plateau sont disposés des dispositifs magnétiques en regard et qui s'attirent mutuellement. Ces dispositifs magnétiques permettent le guidage du plateau au-dessus de la piste. Ainsi, il n'est plus nécessaire d'utiliser des guides latéraux 18. L'usage d'un plateau évite le contact direct entre les jets d'air et la tranche et donc l'arrachage des particules de la tranche. Enfin, en bout de piste, un aménagement du dispositif magnétique couplé à un arrangement circulaire des orifices 16 délivrant les jets d'air, permet une mise en rotation du plateau sur lui-même. Cette mise en rotation provoque l'arrêt de la translation du plateau. Les butées 20 d'arrêt n'ont donc plus lieu d'être.

De façon plus précise, l'invention concerne un dispositif de transport d'une pièce sur coussin d'air avec guidage magnétique comprenant une piste ayant une face supérieure, ladite piste comportant des conduits de jets d'air débouchant obliquement dans un premier sens longitudinal sur sa face supérieure, permettant ainsi de déplacer longitudinalement la pièce sans contact avec la piste, caractérisé en ce que :
- le dispositif comprend un plateau circulaire, apte à entrer en rotation et apte à supporter ladite pièce,
- la piste est munie d'un premier dispositif magnétique de guidage constitué par au moins une bande aimantée courant sur sa face supérieure,
- et en ce que le plateau est muni sur sa face en vis-à-vis de la piste d'un second dispositif magnétique présentant une symétrie de révolution en regard du premier dispositif magnétique de guidage.

L'attraction magnétique entre les deux dispositifs magnétiques permet le guidage du plateau au-dessus de la piste lors des déplacements du plateau.

Dans un premier mode préféré de réalisation le premier dispositif magnétique de guidage consiste en deux bandes aimantées parallèles insérées dans la face supérieure de la piste.

Le second dispositif magnétique placé sur le plateau peut alors être constitué d'une couronne en feuille magnétique insérée dans le plateau et dont le diamètre est au moins égal à l'espacement entre les bandes aimantées parallèles.

Pour un bon fonctionnement du dispositif selon l'invention, les lignes magnétiques émanant des bandes magnétiques doivent alors se refermer sur la couronne en feuille magnétique positionnée sur le plateau.

Dans un second mode de réalisation, le premier dispositif magnétique de guidage consiste en une bande aimantée longitudinale insérée au milieu de la face supérieure de la piste.

Le second dispositif magnétique consiste alors en un disque en feuille magnétique inséré dans le plateau, ce disque ayant un diamètre sensiblement égal à la largeur de la bande aimantée insérée au milieu de la face supérieure de la piste.

Selon un aspect secondaire, les jets d'air sont disposés, en fin de piste, suivant un cercle de manière telle que le plateau arrivant au-dessus de ces jets soit mis en rotation. Ce phénomène, lié au positionnement sur la piste d'aimants supplémentaires, permet l'arrêt sans choc du plateau.

Le second dispositif magnétique peut être en un matériau magnétique quelconque apte à être attiré par le premier dispositif magnétique. On utilise de préférence le "Mu-métal".

Selon un aspect secondaire, la piste comporte des conduits de jets d'air débouchant obliquement dans un second sens longitudinal sur sa face supérieure.

Ainsi, le plateau peut être déplacé dans les deux sens longitudinaux de la piste, et être stoppé en bout de piste sans choquer une quelconque paroi. De plus, les jets d'air ne sont pas en contact direct avec l'objet transporté ; le plateau sert donc aussi de protection contre l'agression des jets d'air.

Les caractéristiques et avantages de l'invention apparaîtront mieux après la description qui suit donnée à titre explicatif et nullement limitatif. Cette dernière se réfère à des dessins annexés sur lesquels :

- la figure 1, déjà décrite et relative à l'art antérieur, représente schématiquement en perspective un dispositif de transport sur coussin d'air,
- la figure 2 est une vue en perspective qui représente schématiquement un premier mode de réalisation d'un dispositif selon l'invention,
- la figure 3 est une vue en perspective qui représente schématiquement un second mode de réalisation d'un dispositif selon l'invention,
- la figure 4 est une vue en perspective qui représente schématiquement une extrémité de la piste d'un dispositif selon l'invention.

La figure 2 illustre schématiquement un premier mode de réalisation d'un dispositif selon l'invention. On voit sur la figure 2A que ce dispositif comporte une piste 12 réalisée en un matériau massif (aluminium ou matière plastique par exemple) ou matériau composite (sandwich de matière plastique entre deux plaques d'aluminium par exemple). Cette piste, qui peut être rectiligne ou incurvée, comporte une face supérieure plane constituant la piste proprement dite. La piste 12 comporte deux conduits 14 parallèles et longitudinaux débouchant par des orifices 16 sur sa face supérieure. Les orifices 16 sont tous orientés en oblique dans une même direction longitudinale par rapport à la piste, et ils sont disposés selon deux rangées parallèles placées symétriquement par rapport au milieu de la piste. De l'air sous pression est insufflé dans ces conduits 14, à partir d'une source (non représentée), de manière à ressortir sous forme de jets obliques par les orifices 16.

Un plateau 30 en matériau amagnétique (du silicium ou de l'aluminium ou encore du plastique par exemple) est porté et mis en déplacement sur le coussin d'air formé par les jets. Ce plateau 30, qui a la forme d'un disque plan, permet de transporter des plaquettes de silicium par exemple. Une plaquette est alors simplement posée sur la face supérieure du plateau 30 qui est avantageusement recouverte par une couche antidérapante amagnétique 32, en polymère par exemple, empêchant la plaquette de glisser (cette face supérieure peut être simplement rugueuse). Pour une application au transport de plaquettes de silicium le plateau 30 doit être d'un diamètre inférieur à celui de la plaquette. En fin de parcours la plaquette peut ainsi aisément être soulevée par les bords qui dépassent du plateau 30.

Le plateau 30 est guidé sur la piste 12 au moyen d'un premier dispositif magnétique de guidage 34 placé sur la piste 12, en regard d'un second dispositif magnétique placé sur la face inférieure du plateau 30.

Le premier dispositif magnétique de guidage 34 comprend, dans un premier mode de réalisation de l'invention, deux bandes magnétiques 35, 36 insérées dans deux rainures parallèles longitudinales formées sur la face supérieure de la piste 12, symétriquement par rapport au milieu de cette dernière. Ces bandes 35, 36 en "Ferriflex" adhésif (ferrite agglomérée sur du plastique ou feuillard en Mu-métal) par exemple, peuvent avoir 1 cm de large et être espacées de 2 à 3 cm par exemple.

Les figures 2B et 2C représentent deux exemples de réalisation du second dispositif magnétique placé sur le plateau 30. On voit sur ces figures la face inférieure du plateau 30 située en vis-à-vis de la piste.

Dans une première variante (figure 2B) le second dispositif magnétique est constitué d'une couronne 38 en feuille magnétique (du "Mu-métal" par exemple). Cette couronne 38 est insérée dans la face inférieure du plateau 30 sous forme d'une feuille d'épaisseur allant de 200 à 500 micromètres par exemple. Le diamètre de cette couronne 38 est au moins égal à l'espacement entre les bandes magnétiques 35, 36. De manière préférée la largeur de la couronne est égale à la largeur des bandes magnétiques 35, 36 et le diamètre moyen de cette couronne 38 est sensiblement égal à l'espacement inter-bandes.

De toute façon le dispositif ainsi réalisé présente le maximum de stabilité pendant le vol. Les jets d'air soulèvent et déplacent le plateau 30 ; les dispositifs magnétiques, par leur attraction, guident le plateau 30.

La figure 2C représente un autre exemple de réalisation du second dispositif magnétique. Ce dernier est constitué de deux bandes parallèles 40 en "Mu-métal" par exemple, disposées symétriquement par rapport au centre du plateau 30. Ces bandes 40 sont de manière préférée de même largeur et même espacement que les bandes magnétiques 35, 36.

Les bandes magnétiques 35, 36 se comportent comme des rails sur lesquels viennent s'aligner les bandes 40 du plateau 30.

L'insert des premier et second dispositifs magnétiques dans la piste 12 et le plateau 30 est réalisé de manière à respecter la planéité des faces en regard de la piste 12 et du plateau 30.

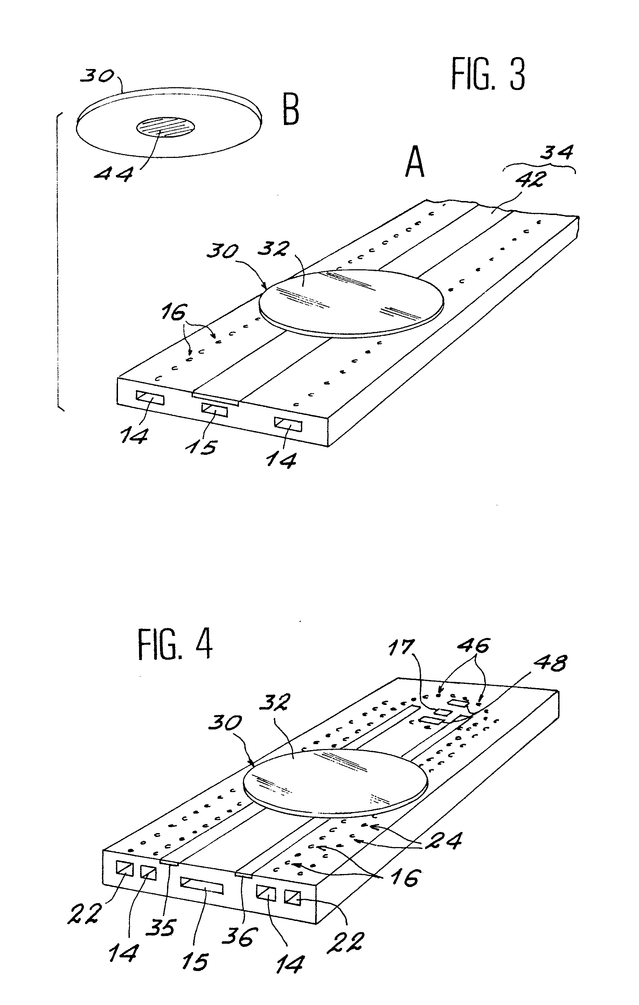

La figure 3 illustre schématiquement un second mode de réalisation de l'invention.

On voit sur la figure 3A que dans ce cas le premier dispositif magnétique 34 est constitué d'une bande unique 42 aimantée insérée dans une rainure longitudinale pratiquée au milieu de la face supérieure de la piste 12.

Sur la figure 3B, on voit la face inférieure du plateau 30 supportant le second dispositif magnétique. Ce dernier consiste en un disque 44 en "Mu-métal" par exemple. Ce disque est inséré dans un évidement pratiqué au centre de la face inférieure du plateau 30, dans le respect de la planéité de la face du plateau 30.

Pendant le déplacement du plateau 30 au-dessus de la piste 12, le disque 44 est positionné en regard de la bande 42.

La figure 4 représente schématiquement une extrémité de la piste d'un dispositif selon l'invention.

Dans ce cas, la piste 12 est traversée par deux conduits supplémentaires 22 parallèles et longitudinaux débouchant par des orifices 24 sur la face supérieure de la piste 12. Ces orifices 24 sont inclinés en oblique dans une direction opposée par rapport aux orifices 16, et ils sont disposés selon deux rangées alignées, symétriques par rapport au milieu de la piste et légèrement décalées par rapport aux orifices 16. De l'air sous pression insufflé dans ces conduits 22 permet un déplacement du plateau 30 dans le sens opposé à celui induit par les jets obliques issus des orifices 16. Le dispositif représenté sur la figure 4 permet donc un déplacement du plateau 30 dans les deux sens longitudinaux de la piste 12.

En fin de piste, l'un au moins des conduits 14 débouche sur la face supérieure de la piste 12 par des orifices 46 disposés selon un cercle dont le centre est situé au milieu de la piste. Les orifices 46 sont percés obliquement de manière à ce que les jets d'air orientés mettent en rotation le plateau 30. Cette mise en rotation alliée à une stabilité de vol du plateau 30 accrue par l'ajout de deux inserts aimantés 48 alignés sur le milieu de la piste 12 provoque l'arrêt du plateau 30. Celui-ci est alors maintenu sur la piste 12 par l'aspiration d'un système à dépression classique comprenant un conduit d'aspiration 15 longitudinal formé dans la piste 12 et débouchant sur la face supérieure de cette dernière par un orifice 17 situé au centre du cercle formé par les orifices 46.

Un dispositif selon l'invention permet donc le transport d'objets sur un plateau qui peut éventuellement se déplacer suivant les deux sens longitudinaux de la piste. Grâce au système de guidage magnétique, la piste peut suivre n'importe quel type de parcours : virages , ascensions, descentes sont permises. Les chocs générateurs de particules polluantes dûs aux guidage et arrêt par guides et butées sont ici évités, ce qui permet la sauvegarde d'un environnement ultrapropre.

**Revendications**

1. Dispositif de transport d'une pièce sur coussin d'air avec guidage magnétique, comprenant une piste (12) ayant une face supérieure, ladite piste (12) comportant des conduits (14) de jets d'air débouchant obliquement dans un premier sens longitudinal sur sa face supérieure, permettant ainsi de déplacer longitudinalement la pièce sans contact avec la piste (12), caractérisé en ce que :
- le dispositif comprend de plus un plateau (30) circulaire, apte à entrer en rotation et apte à supporter ladite pièce,
- la piste (12) est munie d'un premier dispositif magnétique de guidage (34) constitué par au moins une bande aimantée (42) courant sur sa surface supérieure,
- et en ce que le plateau (30) est muni sur sa face en vis-à-vis de la piste (12) d'un second dispositif magnétique présentant une symétrie de révolution en regard du premier dispositif magnétique de guidage (34).

2. Dispositif de transport sur coussin d'air avec guidage magnétique selon la revendication 1, caractérisé en ce que le premier dispositif magnétique (34) de guidage consiste en deux bandes (35, 36) aimantées parallèles insérées dans la face supérieure de la piste (12).

3. Dipositif de transport sur coussin d'air avec guidage magnétique selon la revendication 2, caractérisé en ce que le second dispositif magnétique placé sur le plateau (30) est constitué d'une couronne (38) en feuille magnétique insérée dans le plateau (30) et dont le diamètre est au moins égal à l'espacement entre les bandes (35, 36) aimantées parallèles.

4. Dispositif de transport sur coussin d'air avec guidage magnétique selon la revendication 1, caractérisé en ce que le premier dispositif magnétique (34) de guidage consiste en une bande (42) aimantée longitudinale insérée au milieu de la face supérieure de la piste (12).

5. Dispositif de transport sur coussin d'air avec guidage magnétique selon la revendication 4, caractérisé en ce que le second dispositif magnétique consiste en un disque (44) en feuille magnétique inséré dans le plateau (30) et ce disque (44) ayant un diamètre sensiblement égal à la largeur de la bande aimantée insérée au milieu de la face supérieure de la piste (12).

6. Dispositif de transport sur coussin d'air avec guidage magnétique selon la revendication 1, caractérisé en ce que, en fin de piste (12), au moins un des conduits (14) débouche sur la face supérieure de la piste (12) par des orifices (46) disposés circulairement de manière telle que le plateau (30) soit mis en rotation par les jets d'air évacués par ces orifices (46).

7. Dispositif de transport sur coussin d'air avec guidage magnétique selon la revendication 6, caractérisé en ce qu'au moins un aimant (48) supplémentaire est inséré en bout de piste.

8. Dispositif de transport sur coussin d'air avec guidage magnétique selon la revendication 1, caractérisé en ce que le second dispositif magnétique est en "Mu-métal".

FIG. 1

FIG. 2

FIG. 3

30

B

44

34

42

A

30 32

16

14 15 14

FIG. 4

17 46

48

32

30

24

16

22 14 35 36 14 22

15

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | GB-A-2 133 757  (WESTERN ELECTRIC) * Page 2, ligne 49 - page 3, ligne 7; figures * --- | 1,2 | B 65 G  51/03 |
| A | EP-A-0 035 844  (TEXAS INSTRUMENTS) * Page 10, ligne 30 - page 13, ligne 26; figures * --- | 1 | |
| A | PATENT ABSTRACTS OF JAPAN, vol. 9, no. 29 (M-356)[1752], 7 février 1982, page 1 M 356, & JP-A-59 172 315 (HITACHI YONEZAWA DENSHI K.K.) 29-09-1984 --- | 1,2 | |
| A | IBM TECHNICAL DISCLOSURE BULLETIN, vol 18, no. 9, février 1976, page 2853, New York, US; H. SAUER et al.: " Contactless planetary motion" ----- | 6 | |

|  |  |  | DOMAINES TECHNIQUES RECHERCHES (Int. Cl.4) |
|---|---|---|---|
| | | | B 65 G H 01 L |

Le présent rapport a été établi pour toutes les revendications

| Lieu de la recherche | Date d'achèvement de la recherche | Examinateur |
|---|---|---|
| LA HAYE | 07-09-1989 | OSTYN T.J.M. |

EPO FORM 1503 03.82 (P0402)